# EUROPEAN PATENT APPLICATION

(11) **EP 1 549 089 A1**
(43) Date of publication of application: **29.06.2005**
(21) Application number: 03293288.1
(22) Date of filing: 22.12.2003
(51) Int. Cl.: H04Q 7/32

(54) **Multi-standard mobile terminal with additional bandwidth allocation**

(71) Applicant: ALCATEL, 75008 Paris (FR)
(72) Inventor: Maillard, Hervé, 91430 Igny (FR)
(74) Representative: Richardt, Markus Albert, Dipl.-Ing.

(57) **Abstract**

The present invention relates to a mobile terminal comprising:
- at least first and second wireless interfaces (102, 104),
- means (106, 108, 126, 128) for establishing concurrent at least first and second communication channels (112, 114) via the at least first and second wireless interfaces,
- dispatcher means (108) for supporting a single end to end communication using several communication path simultaneously for selecting one or more of the at least first and second communication channels for transmission of a data packet.

## Description

### Field of the invention.

The present invention relates to the field of telecommunication, and more particularly without limitation to telecommunication through wireless heterogeneous networks.

### Background and prior art

Transparent coexistent of heterogeneous networks is one of the main goals of network integration. In fact, today it is still difficult to reach a seamless vertical handover between different mobile and wireless technologies such as wireless local area network (WLAN) and GPRS.

WLAN is a promising technology that can be used as a compliment technology to UMTS/GPRS at hot-spots to provide high bandwidth and low costs.

Various approaches for WLAN/GPRS integration have been considered in "Mobility management for an integrated network platform", By Kuladinithi, K.; Konsgen, A.; Aust, S.; Fikouras, N.; Gorg, C. , Mobile and Wireless Communications Network, 2002. 4th International Workshop, Pages: 621-625;and "Experimentation of TCP schemes over GPRS & WLAN" By Leang Tzeh Yeu; Liew, J.; Seah, W.K.G., , Mobile and Wireless Communications Network, 2002. 4th International Workshop, Pages: 234- 238. One of the unresolved issues of WLAN/GPRS integration is hand off latency from WLAN to GPRS.

In IEEC802.20-03/104 (http://www.ieee802.org/20/Contribs/C802.20-03-104.pdf) a micro-mobility solution is proposed for management of multiple wireless networks interfaces on a single host. To avoid additional delays during handover procedure generally due to layer treatments the solution is provided at the link layer level, i.e. the MAC layer.

Mobile IP is another approach. Mobile devices can be connected to the Internet by using wireless network interfaces. However, due to roaming, a mobile device may change its network attachment each time it moves to a new link. It is therefore required that efficient protocols will be able to inform the network about this change in network attachment such that the Internet data packets will be delivered in a seamless way to the new point of attachment. Such a protocol is the mobile IP protocol that has been developed by the mobile IP Internet Engineering Task Force (IETF) Working Group.

The key feature of the mobile IP design is that all required functionalities for processing and managing mobility information are embedded in well-defined entities, the home agent (HA), foreign agent (FA) and mobile node (MN). The mobile IP protocol is completely transparent to the transport and higher layers and does not require any changes to existing Internet hosts and routers.

The mobile IP protocol allows the MNs to retain their IP address regardless of their point of attachment to the network. This can be fulfilled by allowing the MN to use two IP addresses. The first one, called home address, is static and is mainly used to identify higher layer connections, e.g. TCP. The second IP address that can be used by an MN is the care-of address. While the mobile is roaming among different networks, the care-of address changes. The reason for this is that the care-of address has to identify the mobile's new point of attachment with respect to the network topology. In the mobile IP the care-of address management is achieved by an entity called foreign agent (cf.ERICSSON open report 3/0362-FCP NB 102 88UEN available on http://ing.ctit. utwente. nl/WU4/Documents/mobip a.pdf).

One of the shortcomings of mobile IP is the latency time experienced by a user when a vertical handover occurs. The latency time may be as long as several seconds.

### Summary of the invention

The present invention provides for a mobile terminal that has at least first and second wireless interfaces, such as WLAN and GPRS interfaces. Such a mobile terminal is also referred to as dual mode terminal.

The mobile terminal can establish concurrent communication channels by means of the available wireless interfaces. A dispatcher of the mobile terminal selects one or more of the communication channels for transmission of a data packet in order to establish a single logical communication channel.

In accordance with a preferred embodiment of the invention the dispatcher selects the available communication channels for a combination of the respective channel capacities. For example, for transmission of a stream of data packets the dispatcher separates the stream into two sub-streams having data rates that can be supported by their assigned respective first and second communication channels. This way the channel capacities are added.

In accordance with a further preferred embodiment of the invention a selection of one of the available communication channels for transmission of a data packet is made based on an attribute of the data packet and/or based on an attribute/capability of the communication channels. For example one of the communication channels is a high bandwidth channel having a relatively high error rate, whereas the other communication channel is a relatively low bandwidth channel having a low error rate. The dispatcher selects the low bandwidth, low error rate channel for data packets that are critical for the transmission and the other channel that has a higher error rate for data packets which are less essential. For example data packets that have a high significance for the purpose of decoding are transmitted via the low bandwidth, low error rate channel. In other words, a communication channel is selected that has an attribute that matched the attribute of the data packet.

In accordance with a further preferred embodiment of the invention at least an additional communication channel is established when a trigger for vertical handover is received or generated by the mobile terminal. The transmission of data packets is duplicated over the communication channels. Next the original communication channel is dropped in order to accomplish the vertical handover with no or minimal latency time.

### Brief description of the drawings

In the following preferred embodiments of the invention will be described in greater detail by making reference to the drawings in which:
- Figure 1: is a block diagram of a telecommunication network in accordance with a first preferred embodiment of the invention,
- Figure 2: is a flow diagram illustrating a preferred embodiment of a method of the invention,
- Figure 3: is a flow diagram illustrating a second preferred embodiment of a method of the invention,
- Figure 4: Is a block diagram of a further preferred embodiment of a telecommunication network of the invention.
- Figure 5: Is a schematic diagram illustrating a vertical handover procedure.

### Detailed description

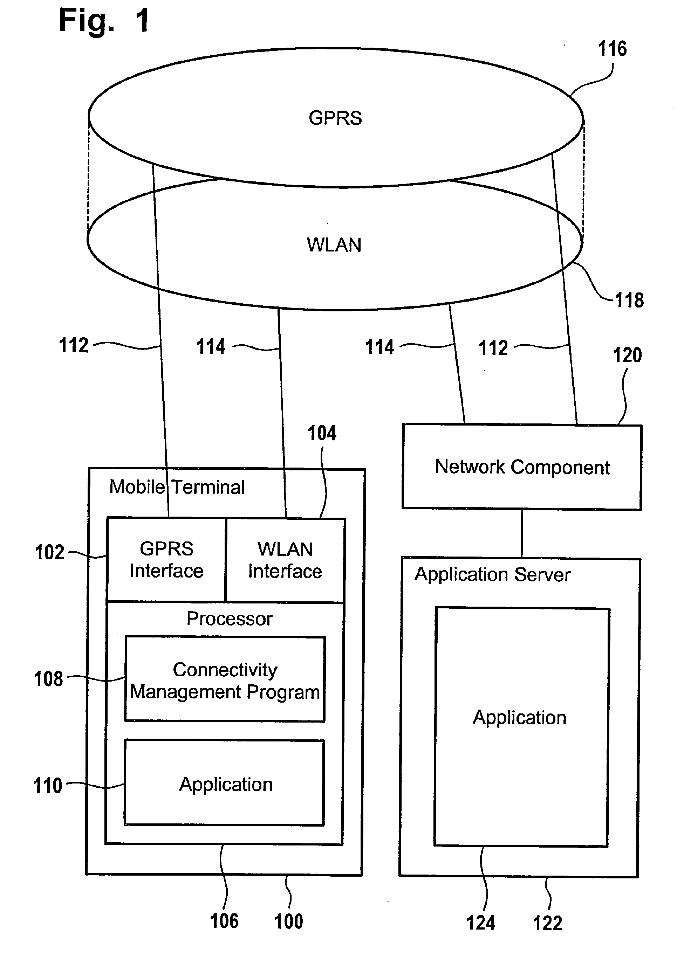

Figure 1 shows mobile terminal 100 that has GPRS interface 102 and WLAN interface 104. Further mobile terminal 100 has microprocessor 106 for running connectivity management program 108 and application program 110.

By means of GPRS interface 102 and WLAN interface 104 mobile terminal 100 can establish respective communication channels 112 and 114 with GPRS network 116 and WLAN network 118, respectively. In the example considered here mobile terminal 100 is in a geographic location that is covered by both GPRS network 116 and WLAN network 118.

Network component 120 is coupled to both GPRS network 116 and WLAN network 118. This way the communication channels 112 and 114 can be formed between mobile terminal 100 and network component 120.

Application server 122 serves for running application program 124 and is coupled to network component 120.

In operation application program 110 of mobile terminal 100 requests the formation of a logical channel for transmission of data packets to application program 124 of application server 122. The request is received by connectivity management program 108 that establishes communication channels 112 and 114 by means of GPRS interface 102 and WLAN interface 104, respectively.

This way a GPRS transport layer is formed on the basis of communication channel 114 and a WLAN transport layer is formed on the basis of communication channel 114. Connectivity management program 108 has a dispatcher functionality. In other words connectivity management program 108 selects one or both of the transport layers for transmission of a given data packet.

In one mode of operation the connectivity management program 108 operates in order to make maximum usage of the combined channel capacities of the communication channels 112 and 114. For this purpose the stream of data packets provided by application program 110 for transmission to application program 124 is split into two streams having data rates that can be supported by communication channel 112 and communication channel 114, respectively. The lower data rate stream of data packets is transmitted from GPRS interface 102 via communication channel 112 and the higher data rate stream of data packets is transmitted from WLAN interface 104 via communication channel 114.

In another mode connectivity management program 108 selects one of the communication channels 112 and 114 for transmission of data packets of application program 110 depending on an attribute of the data packet.

For example the data packet is critical for decoding the stream of data packets by application program 124. In this instance connectivity management program 108 selects the more reliable GPRS interface 102 for transmission of that data packet. Another example is a data packet that carried authentication information or other critical information that is essential for correct provision of the service provided by application program 124.

In general terms connectivity management program 108 can perform a mapping operation in order to map transport requirements associated with data packets of the flow to the respective capabilities of the GPRS and WLAN interfaces 102, 104. For example one of the available interfaces is selected on the basis of one or more of the criteria: delay reliability, security, mobility, ...

In still another mode connectivity program 108 sends data packets of application program 110 via both communication channels 112 and 114 for maximum reliability. Even if one of the transmissions via communication channels 112 and 114 fails the respective data packet is still correctly received by network component 120 due to the redundant data transmission via communication channels 112, 114.

In still another mode only one of the communication channels 112 or 114 is established, e.g. communication channel 112 for GPRS transmission of data packets from application program 110 to application program 124. In response to a trigger for vertical handover connectivity management program 108 establishes the additional communication channel 114. Next the ongoing transmission of data packets via communication channel 112 is duplicated on communication channel 114. After synchronization of the data transmissions via communication channels 112 and 114, communication channel 112 is dropped and the transmission of data packets continues via communication channel 114. This way a vertical handover is accomplished with minimal or no latency time.

It is to be noted that connectivity program 108 can also recombine flows of data packets received via the communication channels 112, 114 for transfer to the application program 110 of the mobile terminal. This way a bidirectional logical communication channel is formed between application program 110 and application program 124.

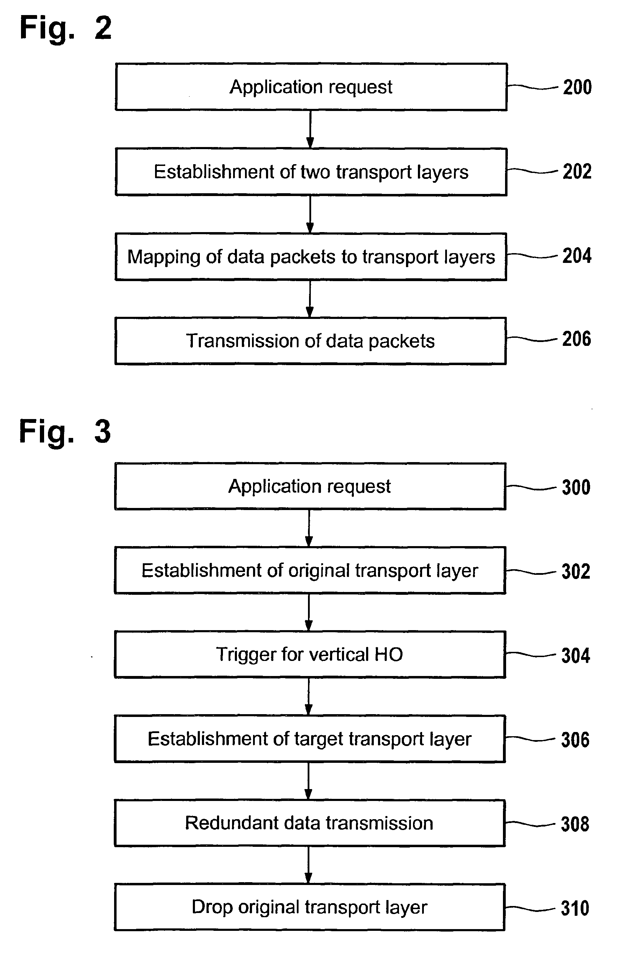

Figure 2 shows a flow chart illustrating one mode of operation of connectivity management program 108 of figure 1. In step 200 the connectivity management program receives a request from the application program of the mobile terminal to establish a logical communication channel for transmission of data packets to an external application server. In response connectivity management program establishes two transport layers via the GPRS and WLAN interfaces (step 202).

In step 204 the connectivity management program maps data packets to transport layers on the basis of attributes of the data packets. The mapping of a data packet to a transport layer is performed by evaluating the attribute that is assigned to the data packet.

For example, an attribute of a data packet can indicate that the data packet is delay critical, requires a highly reliable data transmission, requires a high level of data security, mobility, etc. On the basis of such an attribute assigned to the data packet to be transmitted the connectivity management program selects one of the available interfaces that does best match the respective attribute (step 204). In step 206 the data packets are transmitted via the respective interfaces.

Figure 3 illustrates a mode of operation for vertical handover. In step 300 connectivity management program receives a request from the application program for establishment of a logical channel for transmission of data packets from the application program to an external server. In the example considered here the mobile terminal is within the coverage of only one network.

As a consequence the transport layer is established in step 302 using that network. In step 304 a trigger for vertical handover (HO) is received or generated by the mobile terminal.

In response a target transport layer to which the communication is to be handed over is established in step 306. In step 308 identical data packets are transmitted over both the original transport layer (cf. step 302) and the target transport layer (cf. step 306) for redundant data transmission. After the redundant data transmission via the original and target and transport layers has been established the original transport layer is dropped in step 310. This way a so called soft vertical handover is accomplished, i.e. an inter-system handover with data flow continuity.

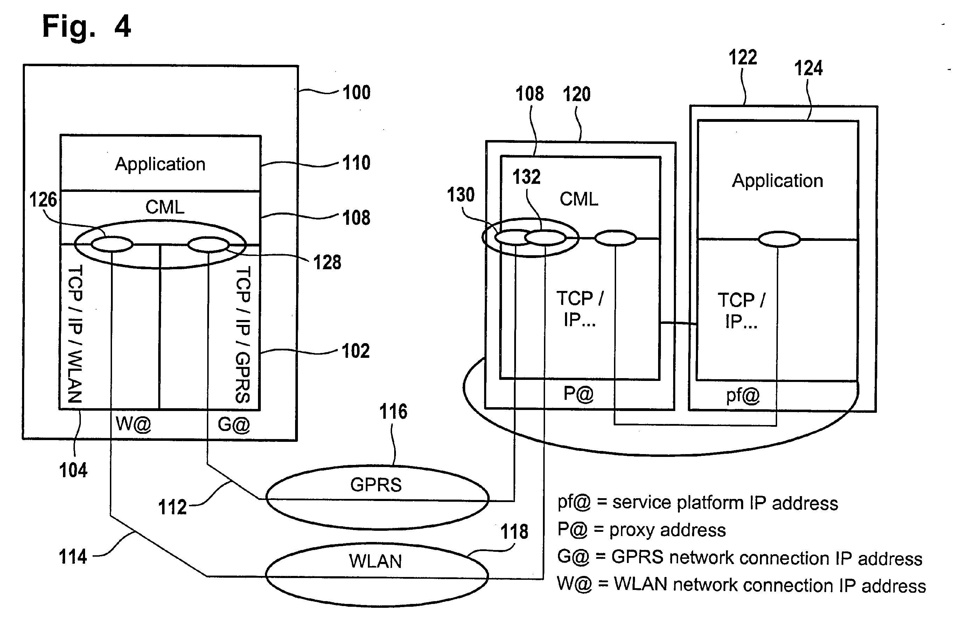

Figure 4 shows a block diagram of a further preferred embodiment. Elements of figure 4 that correspond to elements of the embodiment of figure 1 are designated by the same reference numerals.

When application program 110 of mobile terminal 100 requires transmission of data packets to application program 124 of application server 122 it issues a request for a TCP socket to a connectivity management layer (CML) 108. In response CML108 sets up socket 126 for WLAN communication via communication channel 114 and socket 128 for GPRS communication via communication channel 112. Corresponding sockets 113 and 132 are set up by CML108 of proxy 120. This way mobile terminal 100 can be IP connected to an IP network supporting the application server 122 either for IP/GPRS or IP/WLAN network interfaces.

In the preferred embodiment considered here CML 108 is separated in a component that resides on mobile terminal 108 and a component that resides on proxy 120. CML 108 is located on top of the transport layers. The proxy 120 acts as a proxy gateway for user traffic. Typically this server part can be located in a potential collocated PDG/GGSN in 3GPP scenario 3 coupling architecture

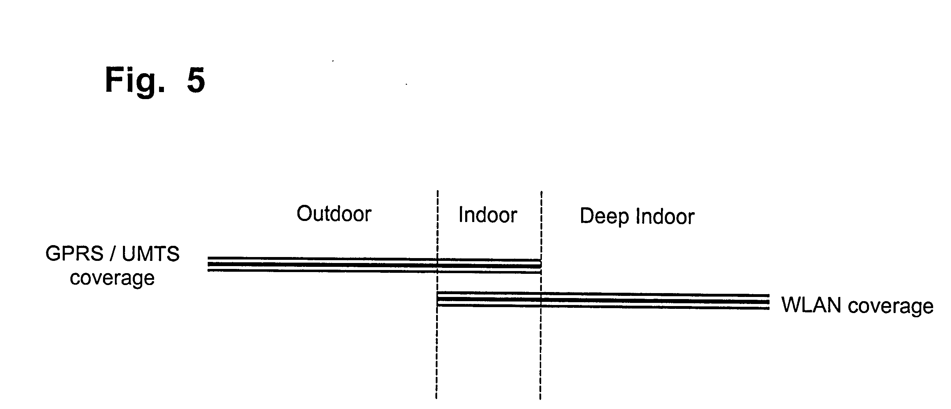

Figure 5 illustrates a heterogeneous network that comprises GPRS/UMTS and WLAN coverage. On the boundary between 'outdoor' and 'deep indoor' the two networks have overlapping coverage in the 'indoor' region. In the 'indoor' area where both GPRS and WLAN coverage is available the user traffic is duplicated and supported by the two network interfaces in parallel.

For example an SIP session is initiated over GPRS when only IP/GPRS interface is available. The SIP session is supported between the mobile terminal and the proxy by a composite socket that is initially only composed of one socket of the IP/GPRS interface, i.e. socket 128.

During the ongoing communication session the user enters a building that is covered by the WLAN network. When the mobile terminal is brought into the WLAN coverage the mobile terminal is connected automatically to the WLAN network and the CML adds socket 126 to the composite socket. When the mobile terminal recognises the deteriorating GPRS coverage as indicated by corresponding radio parameters this triggers initiation of a vertical handover procedure; the CML duplicates at emission traffic over IP/WLAN and IP/GPRS sockets and reconstitutes at reception by proxy 120 the original data flow. When coverage of the GPRS network is lost, the composite socket remains active relying only on IP/WLAN coverage.

### List of Reference Numerals

- 100: Mobile Terminal
- 102: GPRS Interface
- 104: WLAN Interface
- 106: Microprocessor
- 108: Connectivity Management Program
- 110: Application Program
- 112: Communication Channel
- 114: Communication Channel
- 116: GPRS Network
- 118: WLAN Network
- 120: Network Component
- 122: Application Server
- 124: Application Program
- 126: Socket
- 128: Socket
- 130: Socket
- 132: Socket

## Claims

1. A mobile terminal comprising:
- at least first and second wireless interfaces (102, 104),
- means (106, 108, 126, 128) for establishing concurrent at least first and second communication channels (112, 114) via the at least first and second wireless interfaces,
- dispatcher means (108) for establishing a logical communication channel by using the first and second communication channels simultaneously.

2. The mobile terminal of claim 1, the dispatcher means being adapted to combine the channel capacities of the at least first and second communication channels in order to increase the available bandwidth for the logical communication channel.

3. The mobile terminal of claim 1, the dispatcher means being adapted to select, on a per packet basis, one of the at least first and second communication channels based on an attribute of the data packet and/or attributes of the communication channels.

4. The mobile terminal of claim 1, the means for establishing being responsive to a trigger for vertical handover and the dispatcher means being adapted for redundant transmission of the data packet via the at least first and second communication channels for preparation of the vertical handover.

5. A computer program product for a mobile terminal comprising instructions for:
- receiving a data packet from an application of the mobile terminal,
- establishing at least first and second communication channels via the at least first and second wireless interfaces,
- selecting one or more of the at least first and second communication channels for transmission of the data packet in order to establishing a logical communication channel,
- recombining of data packets received via the at least first and second communication channels for transfer to the application of the mobile terminal via the logical communication channel.

6. The computer program product of claim 5, the instructions implementing a dispatcher scheme for a combination of the channel capacities of the at least first and second channels.

7. The computer program product of claim 5, the instructions being adapted to select one of the at least first and second communication channels based on an attribute of the data packet and/or the capabilities of the available channels

8. The computer program product of claim 5, the instructions being responsive to a trigger for vertical handover in order to initiate redundant transmission of the data packet via the at least first and second communication channels.

9. A telecommunication method for transmission of data packet from a mobile terminal to a network component, the method comprising:
- receiving a data packet from an application of the mobile terminal,
- establishing at least first and second communication channels via the at least first and second wireless interfaces,
- selecting one or more of the at least first and second communication channels for transmission of the data packet.

10. A telecommunication network comprising an application server and a proxy being coupled to the application server, the proxy being adapted to form at least first and second communication channels with a mobile terminal in accordance with claim 1.
